Europäisches Patentamt

European Patent Office

Office européen des brevets

(19)

(11) Publication number: **0 063 006**
**B1**

# (12) EUROPEAN PATENT SPECIFICATION

(45) Date of publication of patent specification: **28.08.85**

(21) Application number: **82301721.5**

(22) Date of filing: **01.04.82**

(51) Int. Cl.⁴: **B 32 B 27/00,** C 08 L 23/08,
C 08 L 29/04

(54) **Ethylene vinyl alcohol copolymer blend, a process for producing a composite film therefrom and the composite film per se.**

(30) Priority: **01.04.81 US 249975**

(43) Date of publication of application:
**20.10.82 Bulletin 82/42**

(45) Publication of the grant of the patent:
**28.08.85 Bulletin 85/35**

(84) Designated Contracting States:
**BE DE FR GB IT SE**

(56) References cited:
FR-A-2 392 071

PATENTS ABSTRACTS OF JAPAN, vol. 2, no.
89, 21st July 1978, page 1383C78;

PATENTS ABSTRACTS OF JAPAN, vol. 3, no.
100, 24th August 1979, page 79C56;

PATENTS ABSTRACTS OF JAPAN, vol. 3, no.
100, 24th August 1979, page 79C56;

(73) Proprietor: **AMERICAN CAN COMPANY**
**American Lane**
**Greenwich, Connecticut 06830 (US)**

(72) Inventor: **Odorzynski, Thomas W.**
**255 Warren Court**
**Green Bay Wisconsin (US)**
Inventor: **Knott, Jack E.**
**717 S. Mueller**
**Appleton Wisconsin 54911 (US)**

(74) Representative: **Harvey, David Gareth et al**
**Graham Watt & Co. Riverhead**
**Sevenoaks Kent TN13 2BN (GB)**

Courier Press, Leamington Spa, England.

## Description

The present invention relates to an ethylene vinyl alcohol (EVOH) copolymer blend, a process for producing a composite film therefrom and the composite film per se.

EVOH copolymers are now recognized to have considerable value in packaging films, especially those that are intended for use for foods and other products that require protection against oxygen. The EVOH films do, however, suffer from a number of drawbacks. In particular, films made of EVOH tend to lack toughness and to be brittle, particularly in the thin sections in which they are most economically used. Moreover, they do not provide an effective barrier against water or water vapor; in fact, the oxygen barrier properties of EVOH films decrease dramatically under conditions of relatively high humidity.

To accommodate such deficiencies and still take advantage of their attributes, the EVOH resins are normally used in multilayer films, wherein the EVOH layer is laminated to one or more structural layers, such as may be provided by nylon, polyethylene, polypropylene, and the like, and to various heat sealing layers, exemplary of which are the ionomer resins, ethylene vinyl acetate copolymers, etc.

However, because of the relatively poor flow characteristics exhibited by the EVOH copolymers in the softened and fused states, other difficulties are encounted when they are utilized in such multilayer films. Thus, it is found to be most difficult to achieve a uniform caliper across the entire width of the web, and this is particularly true when the EVOH is in contact with the other resins within an extruder die for a relatively long period of time. Also, inherent characteristics of the EVOH layer will preclude the use of such films for certain applications, and especially when the film is to be subsequently formed, as by vacuum thermoforming, which tends to cause small voids or so-called "pin-holes" to develop therein.

We have been aiming to provide an EVOH blend which can be extruded to produce composite films of uniform caliber, and which exhibit a reduced tendency to form pin-holes, splits and similar defects when subjected to forming operations or abuse. Blends according to our invention provide films which exhibit excellent oxygen barrier properties, high levels of clarity and freedom from haze, and structural properties that are improved in one or more respects.

Compositions disclosed herein are capable of being extruded at reduced temperatures and/or with reduced power requirements (compared with prior EVOH compositions), thereby enhancing the economy of conversion.

We have also devised processes by which the presently developed compositions may be coextruded with other thermoplastic resinous materials, and provide novel composite products therefrom.

According to the present invention, there is provided an ethylene vinyl alcohol copolymer resin blend that is extrudable to produce a film of uniform caliber and excellent oxygen barrier properties, characterised by comprising about 95 to 80 weight percent of ethylene vinyl alcohol copolymer having a molecular weight of about 15,000 to 30,000 and a melting point temperature of about 163 to 191°C (325° to 375°F) and at least 1 weight percent, for example about 5 to 20 weight percent of a plasticizing agent selected from aromatic sulfonamide plasticizers, polyethyl oxazoline, polyvinyl pyrrolidone and polyvinyl formaldehyde the plasticizing agent being compatible with the copolymer and capable of intermolecular hydrogen bonding therewith.

Preferably, the blend will contain at least 90 weight percent of the EVOH copolymer. The most desirable plasticizers will, in many instances, be the aromatic sulfonamides, especially preferred amongst which are the o,p-toluene and the ethylbenzene derivatives.

Also according to the invention, there is provided a process for producing a composite film product of uniform caliper and excellent oxygen barrier properties, characterised by the steps comprising:

a. producing an intimate blend of about 95 to 80 weight percent of an ethylene vinyl alcohol copolymer having a molecular weight of about 15,000 to 30,000 and a melt temperature of about 163 to 191°C (325° to 375°F) and at least 1 weight percent, for example about 5 to 20 weight percent of a plasticizing material selected from aromatic sulfonamides, polyethyl oxazoline, polyvinyl pyrrolidone, and polyvinyl formaldehyde.

b. heating the composition ·to effect fusion thereof;

c. continuously forcing the fused composition into a coextrusion die;

d. simultaneously forcing a fused film-forming resin into the die, the film-forming resin having a composition different from that of the said blend, and being adherent thereto in the fused state;

e. combining the blend and resin in the die into a laminar structure comprised of first and second layers, respectively;

f. forcing the laminar structure through a die portion wherein said structure is substantially widened and thinned;

g. extruding the resultant structure from the die as a composite film; and

h. cooling the film to produce the composite film product.

The resultant sheet extruded from the die is a composite film, wherein the caliper of each of its layers is substantially uniform across the width of the sheet. To complete the process, the film is cooled to produce the desired product.

Desirably, the film forming resin that is coextruded with the EVOH copolymer will generally be selected from the group consisting of high molecular weight polyamides, anhydride modified polyolefin adhesives, and partially hydrolyzed ethylene vinyl acetate copolymer adhesives, and the polyamides utilized will generally have a molecular weight in the range of about 20,000 to 30,000, and a melting point temperature of about 213 to 227°C (415° to 440°F).

The process will most advantageously be carried out utilizing a stationary die, from which the extrudate will be cast upon a chill roll; typically, during passage through the die portion the composite structure will be increased in width by a factor of at least about 40. The process is capable of producing a composite film wherein the thickness of the EVOH blend layer will not exceed, at any point across the width of the web, about 40 percent of the mean thickness value, and wherein at least about 60 percent of the copolymer layer will have a thickness that lies within about 20 percent of its intended (i.e., the mean) value.

In especially desirable embodiments of the process, a second film forming resin is introduced into the die, and combined with the EVOH composition and the first-mentioned resin into the laminar structure, to comprise a third layer thereof. The third layer may be disposed in full surface contact with the second layer of the laminar structure, in which event the first mentioned film forming resin (comprising the second layer) will serve to bond the first and third layers. In such a process, the adhesive resins thereinabove identified will advantageously be utilized as the first-mentioned resin, and the second mentioned resin may be one selected from the group consisting of polyethylene, polypropylene, ionomer and ethylene vinyl acetate copolymer (substantially unhydrolyzed). Alternatively, the first-mentioned and second-mentioned resins may both comprise film-forming polyamides having molecular weights in excess of about 20,000. In such a case, the second and third layers (comprised of the polyamide resin) will both be in full surface contact on opposite sides of the first layer (of EVOH copolymer blend).

Also according to the invention, one or more additional film forming resins may be introduced into the die, and combined with the EVOH composition and the first and second-mentioned resins into the laminar structure. The structure can comprise a fourth layer. Also, a fifth layer may be provided adjacent the fourth layer, with the fifth layer being a heat sealing resin (such as ionomer) and the fourth layer comprising an adhesive serving to bond the ionomer to an adjacent layer (such as may be of polyamide resin). Typically, a composite film of the foregoing nature will have an overall thickness of about 0,08 to 0,13 mm (3 to 5 mils). The first and second resin layers with the EVOH layer can comprise 50 percent of the volume of the film. The second resin layer is disposed on the exterior of the film and is about 2.5 times the thickness of the EVOH layer; the second resin layer is about one-half the thickness of the EVOH layer.

The process may include the additional steps of reheating the film to a temperature suitable for thermoforming, and thereafter subjecting the heated film to mechanical or fluid pressure, to stretch at least a portion of it. The product obtained upon cooling of the stretched film, to set it in its distorted condition, will be substantially free from pin-holes, cracks, and like defects.

The invention further provides a composite film characterised in that it comprises successive layers of a film-forming polyamide resin, at least one plasticized ethylene vinyl alcohol copolymer, a film-forming polyamide resin, an adhesive and an ionomer resin, respectively, the film-forming polyamide resin having a molecular weight of about 20,000 to 30,000 and a melting point temperature of about 213 to 227°C (415° to 440°F), the EVOH copolymer having a molecular weight of about 15,000 to 30,000, a vinyl alcohol moiety content of about 60 to 75 percent thereof, and a melting point temperature of about 163 to 191°C (325° to 375°F), and said adhesive layer comprising an anhydride modified polyolefin or a partially hydrolysed ethylene vinyl acetate copolymer, the EVOH copolymer being plasticized by a plasticizing agent selected from aromatic sulphonamide plasticizers, polyethyl oxazoline, polyvinyl pyrrolidone and polyvinyl formaldehyde.

The invention is now described in what follows in more detail by way of non-limitative illustration.

EVOH copolymers that are suitable for use herein will generally contain at least about 55, and as much as 80, weight percent of vinyl alcohol in the molecule; the preferred copolymers will contain about 60 to 75 weight percent of the vinyl alcohol moiety. The remainder of the molecule will consist essentially of ethylene; however, because such products are produced by hydrolysis of ethylene vinyl acetate copolymers, some residual vinyl acetate will usually be present. Normally, there will be less than about 3 weight percent of vinyl acetate in the EVOH molecule, and preferably it will be present at a level below 1.5 percent.

The EVOH copolymers will typically have molecular weights in the range of about 20,000 to 30,000 corresponding roughly to melt indices ranging from about 9 to 1.5. The melt index values for these resins are determined in accordance with ASTM test D-1238, Procedure E or L, using a weight of 2160 g and a temperature of either 190° or 230°C, as appropriate. Typically, the copolymers will have specific gravities of about 1.1 to 1.2, and their melting points will normally range from about 163 to 191°C (325° to 375°F). Suitable temperatures for processing them will be about 204 to 249°C (400° to 480°F), in the unplasticized state. While the degradation temperature of EVOH is generally regarded to be about 232°C (450°F), it should be appreciated that this is not inconsistent, due to the residence time factor and its effect upon degradation. Specific EVOH resins that are suitable for use are available from Kuraray and from Nippon Gohsei, both of Japan, the products of the former company being designated EP-E and EP-F, and those of the latter company being designated GL-D and GL-E, respectively.

The plasticizer utilized to produce blends according to the present invention must, of course, be one that is compatible with the EVOH copolymer employed, so as to avoid excessive blooming. Furthermore, it must be one that will not degrade at the temperatures to which the composition must be heated during processing and conversion, and it must be capable of intermolecular hydrogen bonding with the copolymer, so as to reduce its effective crystallinity and thereby improve flow characteristics.

Among the preferred plasticizers for use in the blends are the aromatic sulfonamide products, typified by those commercially available from the Monsanto Chemical Company under the brand designation SANTICIZER®. Specific products in that category include No. 8 (i.e., a mixture comprising N-ethyl-o,p-toluenesulfonamide), No. 8 special (i.e., methylbenzene sulfonamide), No. 9 (i.e., a mixture comprising o,p-toluene-sulfonamide), and No. 1-H (i.e., N-cyclohexyl-p-toluenesulfonamide); of the foregoing, the product that is found to be most desirable for many purposes is SANTICIZER® 9. As indicated, other materials may also be advantageously utilized as plasticizers in the present blends, including polyethyl oxazoline, polyvinyl pyrrolidone and polyvinyl formaldehyde.

The amount of plasticizer incorporated will generally not exceed 20 weight percent of the total blend (i.e., the combined weights of the plasticizer and the EV.OH copolymer), and frequently little if any added benefit will be found to result from the incorporation of more than about 10 percent thereof. On the other hand, while plasticizer concentrations as low as 1 or 2 weight percent may be employed, satisfactory results will generally require that at least 5 percent be used; accordingly, the preferred range of plasticizer concentration is about 5 to 10 weight percent, again based upon the total weight of the blend.

It is to be noted that, in accordance with the present invention relatively large amounts of plasticizer can be incorporated without significant detriment to the oxygen barrier properties of the EVOH copolymer. More particularly, when unadulterated copolymers of the sort that are utilized in the practice of the present invention have the form of a layer 0.025 mm (1 mil) thick, they will generally transmit oxygen at a rate less than 1 $cm^3/m^2$ of surface area, during a period of twenty-four hours under conditions of zero relative humidity and 23°C (73°F). Incorporating as much as 20 weight percent of the plasticizers described into the copolymer is unexpectedly found not to increase the oxygen transmission rate above that value. Perhaps it should be mentioned that oxygen transmission at the indicated rate is regarded to characterize an excellent oxygen barrier film, and generally the apparatus utilized for the determination (e.g., a MoCon oxygen analyzer) will not therefore be designed to measure lower values.

As indicated previously, the EVOH copolymers are normally utilized in multilayer films including other components intended to impart toughness, structural integrity, water vapor barrier properties, tensile strength, and other characteristics. Typical of such companion layers are the film-forming polyamides, polyethylenes (low, medium and high density), polypropylene, modified polyolefins, and polyolefin copolymers such as of ethylene vinyl acetate and of ethylene acrylic acid, ionomers (e.g., duPont SURLYN® products). Because of the poor adhesion of EVOH compositions to most resins other than the polyamides, it will generally be the practice to incorporate a layer of an adhesive material between the EVOH copolymer and the other component. As taught in United States Patents Nos. 4,233,367, 4,239,826, and 4,254,169 (all of which are assigned to ourselves).

A number of suitable extrudable adhesives are available on the market, typical of which are the products sold by Chemplex Company under the PLEXAR® designation, and described in United States Patents Nos. 4,087,587 and 4,087,588, and the resins sold by U.S. Industrial Chemicals Company, Division of National Distillers and Chemical Corp. Under the designations S-2037 and S-2038, which are described in United States Patent No. 4,239,826. Other suitable adhesives are available from Norchem Company under the designation No. 2910, and from DuPont as CXA 3101. In all instances, it is believed that such adhesives may be categorized as either anhydride modified polyolefins or partially hydrolyzed ethylene vinyl acetate copolymers. It should be appreciated that, to minimize expense, the adhesive layer may itself be a composite, comprised of a core of a compatible, adherent resin, such as conventional ethylene vinyl acetate copolymer, interposed between relatively thin outer layers of the adhesive, per se.

As indicated above, a significant difficulty is often encountered in the coextrusion of EVOH copolymers with other polymers, apparently because of the rheology of the EVOH resin, which causes nonuniform thicknesses to occur across the width of the coextrudate; this is, of course, highly undesirable. The effect is especially pronounced when the composite films are produced by cast coextrusion, because the die is stationary (as opposed to the rotary dies often used in blown extrusion to promote uniformity), and because its configuration causes the resins to have a relatively long residence time in contact with one another; i.e., the combining die head may widen the laminate structure by factors of 40 to 80 fold, or more. This is not, of course, to say that products of the present invention may not be produced by means other than casting, such as by blown film and extrusion coating techniques.

Indicative, however, of such a problem of caliper variation are the difficulties that are encountered in cast coextruding a composite film including (among other components, which will hereinafter be identified in connection with Example 4) layers of nylon 6 on the opposite sides of a core of unmodified EVOH copolymer. Despite control to obtain a layer of the copolymer 0.01 mm (0.4 mil) thick (between layers of nylon 0.005 and 0.02 mm (0.2 and 1.0 mil) thick), measurements taken at points across the width of the coextruded web show that thicknesses in excess of 0.018 mm (0.7 mil) are produced (with corresponding variations in the two nylon layers). Moreover, it is also found that as much as 70 percent of the EVOH layer deviates by more than 20 percent from the mean value desired. This can be contrasted with the results obtained utilizing, in lieu of the unplasticized EVOH resin, the same copolymer blended with 10 weight percent of a plasticizer, in accordance with the invention. Coextrusion under comparable conditions produces no region of EVOH that is thicker than 0.015 mm (0.6 mil), and more than 60 percent of the film (again as determined by measurements taken at multiple points across its width) lies within 20 percent of the mean value of 0.01 mm (0.4 mil).

Yet another benefit attributable to the inclusion of a plasticizer concerns the results that are achieved in thermoforming of films containing a layer of modified EVOH copolymer. In such procedures, the film is heated to a temperature below its melting point but above that at which it can be permanently deformed (i.e., its glass transition temperature), and it is subjected to either mechanical or fluid pressure, so as to modify its shape. A serious problem is encountered in such operations, particularly when the film is subjected to deep drawing, in that small voids or "pinholes" tend to develop, thus destroying the integrity of the package and rendering it unacceptable for most applications (and certainly when oxygen barrier properties are paramount). As will be seen in connection with Example 4, such problems may be obviated, or at least minimized, in the composite films of the invention.

Exemplary of the efficacy of the present invention are the following specific Examples:

### Example 1

In a compounding extruder, nine parts of Kuraray EP-F resin are blended with one part of SANTICIZER® 9, and are extruded and chopped to produce pellets of the blended composition. These pellets are then introduced into a small extruder having a 25.4 mm (1 in) screw and a 35.6 cm (14 ins) die lip width, and the resin is extruded and cast upon a cold chill roll. The temperature of the melt at the point of exit from the die is about 204°C (400°F), and the film thickness is approximately 0.05 mm (2.0 mils).

For the sake of comparison, the same extruder is operated under the same temperature conditions to extrude pellets of the same EVOH copolymer from which the plasticizing agent is omitted. Substantial increases in back-pressure and power requirements are noted, indicating that a considerable reduction could be made in the temperature conditions used for extrusion of the plasticized copolymer.

Specimens of films of both the modified and also the unmodified copolymer are tested for oxygen transmission, utilizing a MoCon oxygen analyzer. It is found that both films are excellent oxygen barriers, each permitting transmission at a rate of less than one cubic centimeter-mil per meter square of surface area, during a period of 24 hours and under conditions of zero percent relative humidity and 23°C (73°F). The tear strength, percent elongation and impact strength of both films are also tested, and found to be substantially improved by the incorporation of the plasticizer.

### Example 2

The foregoing tests are repeated utilizing films in which the SANTICIZER® 9 is replaced by the same amount of each of the following plasticizers: polyvinyl pyrrolidone, polyvinyl formaldehyde and polyethyl oxazoline. Again in comparison with the film produced using the unmodified EVOH copolymer, in all instances comparable oxygen barrier properties are exhibited. In addition, the polyvinyl pyrrolidone improves elongation, tear strength and impact; the polyvinyl formaldehyde and the polyethyl oxazoline improve impact primarily, with the latter compound also increasing tensile strength and elongation somewhat.

### Example 3

The same tests are again performed, but in this instance substituting each of several different EVOH copolymers, both as unmodified and also as modified by SANTICIZER® 9, to produce films; the copolymers employed are those identified above and designated EP-E, GL-D and GL-E. Extrusion temperatures are adjusted to correlate to the melting point of each resin. Upon testing, comparable oxygen barrier properties are found to exist, regardless of whether the film is plasticized or not; the plasticized EVOH copolymers are again extruded with less back-pressure, and various physical property improvements are exhibited, as noted above.

### Example 4

The SANTICIZER® 9 modified copolymer of Example One is introduced into an appropriate coextrusion die, together with feed-streams of 25,000 molecular weight nylon 6, SURLYN®, and of an adhesive of the sort described above, and effective to bond the SURLYN® to the nylon. The composite film product contains successive layers of nylon, modified EVOH copolymer, nylon, adhesive and SURLYN®, in respective thicknesses of about 0.02, 0.01, 0.005, 0.3 mm (1.0 mil, 0.4 mil, 0.2 mil, 1.2 mils and 1.2 mils). The EVOH copolymer is introduced into the combining adaptor of the extruder at a temperature of about 221°C (430°F), and the nylon is introduced thereinto at a temperature of approximately 277°C (530°F). The die itself is maintained at a temperature of approximately 260°C (500°F), and the overall width of the extruded composite film is approximately 203 cm (80 in) (having had a substantially square cross-sectional configuration, of about 6.45 cm² (1 in²) in area, at the inlet side of the die head). A similar film is produced in the manner described, which differs only in that the EVOH copolymer utilized is not modified by incorporating the plasticizing agent.

Upon cooling, the two films are tested for oxygen transmission, and each is found to have a value of less than 1 cm³, in the units and under the conditions described previously. Caliper measurements across the width of the two films produce the data hereinabove set forth with reference to this Example, thus substantiating the significant improvement in caliper control indicated (i.e., no region of EVOH thicker than 0.015 mm (0.6 mil), and more than 60 percent thereof lying within 20 percent of the mean value of 0.01 mm (0.4 mil).

Finally, as also alluded to above, the two films are subjected to thermoforming operations utilizing a Mahaffey-Harder machine No. 717 to package sausage, under appropriate conditions, which are identical in both instances. As a result, three pin-holes are produced during a run of the unplasticized composite film, whereas no pin-holes are developed during a comparable run using the film containing the plasticized EVOH copolymer. Moreover, in a 1609 km (1,000-mile) transportation simulation test, involving 36 packages produced with each of the films, four severe pin-holes develop in the web including the unplasticized EVOH copolymer; in contrast, only one minute pin-hole is found to have developed in the film produced with the SANTICIZER®-containing EVOH resin.

Thus, it can be seen that the present invention provides a novel EVOH blend which can be coextruded with other resins to produce composite films of uniform caliper, which films are relatively tough and exhibit a reduced tendency to form pinholes, splits and the like when subjected to theremoforming operations or abuse. Films made in accordance with the invention exhibit excellent oxygen barrier properties, and high levels of clarity and freedom from haze; certain structural properties, or "physicals", are also normally improved. The modified resins are capable of being extruded at reduced temperatures and/or with reduced power requirements, thereby maximizing the economy of conversion. The invention moreover provides novel processes and products thereof.

## Claims

1. An ethylene vinyl alcohol (EVOH) copolymer resin blend that is extrudable to produce a film of uniform caliper and excellent oxygen barrier properties, characterised by comprising about 95 to 80 weight percent of ethylene vinyl alcohol copolymer having a molecular weight of about 15,000 to 30,000 and a melting point temperature of about 163 to 191°C (325° to 375°F) and at least 1 weight percent, for example about 5 to 20 weight percent of a plasticizing agent selected from aromatic solfonamide plasticizers, polyethyl oxazoline, polyvinyl pyrrolidone and polyvinyl formaldehyde, the plasticizing agent being compatible with the copolymer and capable of intermolecular hydrogen bonding therewith.

2. The composition according to claim 1, characterised by containing at least 90 weight percent of the EVOH copolymer.

3. The composition according to claim 1 or claim 2 characterised in that the plasticizing agent is an aromatic sulfonamide and is selected from o,p-toluene sulfonamide, N-ethyl-o,p-toluenesulfonamide and ethylbenzene sulfonamide.

4. A process for producing a composite film product of uniform caliper and excellent oxygen barrier properties, characterised by the steps comprising:

a. producing an intimate blend of about 95 to 80 weight percent of an ethylene vinyl alcohol copolymer having a molecular weight of about 15,000 to 30,000 and a melt temperature of about 163 to 191°C (325° to 375°F) and at least 1 weight percent, for example about 5 to 20 weight percent of a plasticizing material selected from aromatic sulfonamides, polyethyl oxazoline, polyvinyl pyrrolidone, and polyvinyl formaldehyde.

b. heating the composition to effect fusion thereof;

c. continuously forcing the fused composition into a coextrusion die;

d. simultaneously forcing a fused film-forming resin into the die, the film-forming resin having a composition different from that of the said blend, and being adherent thereto in the fused state;

e. combining the blend and resin in the die into a laminar structure comprised of first and second layers, respectively;

f. forcing the laminar structure through a die portion wherein said structure is substantially widened and thinned;

g. extruding the resultant structure from the die as a composite film; and

h. cooling the film to produce the composite film product.

5. The process according to claim 4, characterised by the plasticizer being an aromatic sulfonamide selected from o,p-toluene sulfonamide, N-ethyl-o,p-toluenesulfonamide and ethylbenzene sulfonamide.

6. The process according to claim 4 or claim 5, characterised by the film-forming resin being selected from high molecular weight polyamides having a melting point temperature of about 213 to 227°C (415° to 440°F), partially hydrolyzed ethylene vinyl acetate copolymer adhesives, and anhydride modified polyolefin adhesives.

7. The process according to claim 6, characterised by the film-forming resin comprising a polyamide having a molecular weight in the range of about 20,000 to 30,000.

8. The process according to any of claims 4 to 7, characterised by the use of a stationary die in steps (c) to (g) and by casting the film extruded therefrom upon a chill roll.

9. The process according to any of claims 4 to 8, characterised by increasing the width of said structure in step (f) at least about 40 fold.

10. The process according to any of claims 4 to 9, characterised in that the thickness of said first layer does not exceed, at any point across the width of said film, about 40 percent of the mean thickness value of said layer, and wherein at least about 60 percent of said layer has a thickness within about 20 percent of said mean value.

11. The process according to any of claims 4 to 10, characterised by introducing a second film-forming resin into said die, for combination with the blend and the first-mentioned resin into the laminar structure as a third layer thereof.

12. The process according to claim 11, characterised by disposing the third layer in full surface contact with the second layer which is the first-mentioned resin and which serves to bond the first and third layers together.

13. The process according to claim 11 or claim 12, characterised in that the second resin is selected from polyethylene, polypropylene, ethylene vinyl acetate copolymer, and ionomer resin.

14. The process according to claim 11 or claim 12, characterised in that the first and second resins both comprise polyamide resins having molecular weights of about 20,000 to 30,000 and melting point temperatures of about 213 to 227°C (415° to 440°F), the second and third layers comprised of these resins being disposed on opposite sides of the first layer.

15. The process according to any of claims 11 to 14, characterised by introducing at least one additional film-forming resin into the die for combination with the blend and the first and second resins into the laminar structure, to form at least a fourth layer thereof.

16. The process according to claim 15, characterised by providing a fifth layer adjacent the fourth layer, the fifth layer being comprised of an ionomer and the fourth layer comprising an adhesive material which serves to bond the fifth layer to the third layer.

17. The process according to claim 16, characterised in that the film produced has an overall thickness of about 0.08 to 0.13 mm (3 to 5 mils), the first, second and third layers together comprising less than about 50 percent by volume of the film.

18. The process according to claim 17, characterised in that the second layer lies on the exterior of the film and is about 2.5 times the thickness of said first layer, and wherein the third layer is approximately one-half the thickness of the first layer.

19. The process according to any of claims 4 to 18, characterised by the additional steps of:

i. reheating the film to a temperature suitable for thermoforming thereof;

j. subjecting the heated film to mechanical or fluid presure to stretch at least a portion thereof; and

k. cooling the stretched film to set the film in its distorted condition, the set film being substantially free of pin-holes, cracks and like defects.

20. A composite film characterised in that it comprises successive layers of a film-forming polyamide resin, at least one plasticized ethylene vinyl alcohol copolymer, a film-forming polyamide resin, an adhesive and an ionomer resin, respectively, the film-forming polyamide resin having a molecular weight of about 20,000 to 30,000 and a melting point temperature of about 213 to 227°C (415° to 440°F), the EVOH copolymer having a molecular weight of about 15,000 to 30,000, a vinyl alcohol moiety content of about 60 to 75 percent thereof, and a melting point temperature of about 163 to 191°C (325° to 375°F), and said adhesive layer comprising an anhydride modified polyolefin or a partially hydrolyzed ethylene vinyl acetate copolymer, the EVOH copolymer being plasticized by a plasticizing agent selected from aromatic sulfonamide plasticizers, polyethyl oxazoline, polyvinyl pyrrolidone and polyvinyl formaldehyde.

21. The film according to claim 20, characterised in that the film is about 0.08 to 0.13 mm (3 to 5 mils) thick.

22. The film according to claim 21, characterised in that the adhesive layer is itself a composite comprised of a core having exterior layers of the said adhesive.

## Revendications

1. Mélange à base d'une résine copolymère d'éthylène et d'alcool vinylique (EVOH), qui est extrudable pour donner un film ou pellicule d'épaisseur uniforme et présentant d'excellentes propriétés de barrière vis-à-vis de l'oxygène, caractérisé en ce qu'il comprend environ 95 à 80 pourcent en poids d'un copolymère d'éthylène et d'alcool vinylique ayant une masse moléculaire d'environ 15 000 à 30 000 et un point de fusion d'environ 163 à 191°C (325 à 375°F), et au moins 1 pourcent en poids, par exemple environ 5 à 20 pourcent en poids, d'un plastifiant choisi parmi les sulfonamides aromatiques, les plastifiants, la polyéthyloxazoline, la polyvinylpyrrolidone et le polyvinylformaldéhyde, la plastifiant étant compatible avec le copolymère et étant à même de se lier à lui par liaison hydrogène intermoléculaire.

2. Composition selon la revendication 1, caractérisée en ce qu'elle contient au moins 90 pourcent en poids du copolymère EVOH.

3. Composition selon la revendication 1 ou 2, caractérisée en ce que le plastifiant est un sulfonamide aromatique et est choisi entre le o,p-toluènesulfonamide, le N-éthyl-o,p-toluène-sulfonamide et l'éthylbenzènesulfonamide.

4. Procédé pour la production d'un produit du type film ou pellicule composite, d'épaisseur uniforme et présentant d'excellentes propriétés de barrière vis-à-vis de l'oxygène, caractérisé par les étapes consistant:

a. à produire un mélange intime d'environ 95 à 80 pourcent en poids d'un copolymère d'éthylène et d'alcool vinylique ayant une masse moléculaire d'environ 15 000 à 30 000 et un point de fusion d'environ 163 à 191°C (325 à 375°F) et au moins 1 pourcent en poids, par exemple environ 5 à 20 pourcent en poids, d'un plastifiant choisi parmi les sulfonamides aromatiques, la polyéthyloxazoline, la polyvinylpyrrolidone et le polyvinylformaldéhyde;

b. à chauffer la composition pour en provoquer la fusion;

c. à forcer en continu la composition fondue dans une filière de co-extrusion;

d. à forcer simultanément dans la filière une résine filmogène fondue, la résine filmogène ayant une composition différente de celle du mélange, et y adhérant à l'état fondu;

e. à combiner le mélange et la résine dans la filière pour obtenir une structure stratifiée constituée respectivement d'une première et d'une deuxième couches;

f. à forcer la structure stratifiée à traverser une partie de filière dans laquelle la structure subit un élargissement et un amincissement sensibles;

g. à extruder la structure obtenue à partir de la filière, sous la forme d'un film composite; et

h. à refroidir le film pour obtenir le produit film composite.

5. Procédé selon la revendication 4, caractérisé en ce que le plastifiant est un sulfonamide aromatique choisi entre l'o,p-toluènesulfonamide, la N-éthyl-o,p-toluènesulfonamide et l'éthylbenzènesulfonamide.

6. Procédé selon la revendication 4 ou la revendication 5, caractérisé en ce que la résine filmogène est choisie parmi les polyamides à masse moléculaire élevée ayant un point de fusion de 213 à 227°C (415 à 440°F), les adhésifs à base de copolymères d'éthylène et d'acétate de vinyle partiellement hydrolysés, et les adhésifs polyoléfiniques modifiés aux anhydrides.

7. Procédé selon la revendication 6, caractérisé en ce que la résine filmogène comprend un polyamide ayant une masse moléculaire comprise entre environ 20 000 et 30 000.

8. Procédé selon l'une quelconque des revendications 4 à 7, caractérisé par l'utilisation d'une filière fixe dans les étapes (c) à (g) et par la coulée du film qui en est extrudé, sur un cylindre refroidisseur.

9. Procédé selon l'une quelconque des revendications 4 à 8, caractérisé par l'augmentation de la largeur de la structure, dans l'étape (f) d'au moins environ 40 fois.

10. Procédé selon l'une quelconque des revendications 4 à 9, caractérisé en ce que l'épaisseur de la première couche ne dépasse pas, en tout point de la largeur du film, environ 40 pourcent de l'épaisseur moyenne de cette couche, et où au moins environ 60 pourcent de cette couche ont une épaisseur aui s'écarte de moins d'environ 20 pourcent de cette valeur moyenne.

11. Procédé selon l'une quelconque des revendications 4 à 10, caractérisé par l'introduction d'une deuxième résine filmogène dans la filière, pour combinaison avec le mélange et la résine mentionnée en premier, pour donner la structure stratifiée, en formant la troisième couche de celle-ci.

12. Procédé selon la revendication 11, caractérisé par la disposition de la troisième couche de façon qu'elle soit en parfait contact en surface avec la deuxième couche, qui est la résine mentionnée en premier, et qui sert à coller ensemble la première et la troisième couches.

13. Procédé selon la revendication 11 ou la revendication 12, caractérisé en ce que la deuxième résine est choisie parmi les résines de polyéthylène, de polypropylène, de copolymère d'éthylène et d'acétate de vinyle, et les résines ionomères.

14. Procédé selon la revendication 11 ou la revendication 12, caractérisé en ce que tant la première que la deuxième résines comprennent des résines polyamides ayant des masses moléculaires d'environ 20 000 à 30 000 et des points de fusion d'environ 213 à 227°C (415 à 440°F), la deuxième et la troisième couches constituées de ces résines étant disposées sur les côtés opposés de la première couche.

15. Procédé selon l'une quelconque des revendications 11 à 14, caractérisé par l'introduction, dans la filière, pour combinaison avec le mélange, d'au moins une résine folmogène supplémentaire, et de la première et de la deuxième résines dans la structure stratifiée, pour en former au moins une quatrième couche.

16. Procédé selon la revendication 15, caractérisé par la mise en place d'une cinquième couche contiguë à la quatrième couche, la cinquième couche comprenant un ionomère et la quatrième couche comprenant une matière adhésive qui sert à lier la cinquième couche à la troisième couche.

17. Procédé selon la revendication 16, caractérisé en ce que le film produit a une épaisseur globale d'environ 0,08 à 0,13 mm (3 à 5 mils), la première, la deuxième et la troisième couches, prises ensemble, comptant pour moins d'environ 50 pourcent en volume du film.

18. Procédé selon la revendication 17, caractérisé en ce la deuxième couche se trouve sur le côté extrérieur du film et a une épaisseur environ 2,5 fois plus élevée que la première couche, et l'épaisseur de la troisième couche est approximativement égale à la moitié de celle de la première couche.

19. Procédé selon l'une quelconque des revendications 4 à 18, caractérisé par les étapes supplémentaires consistant:

i. à rechauffer le film à une température convenant à son thermoformage;

j. à soumettre le film chauffé à une pression mécanique ou hydraulique pour en étirer au moins une partie; et

k. à refroidir le film étiré pour fixer le film dans son état distordu, le film solidifié étant essentiellement exempt de piqûres, fissures et défauts similaires.

20. Film composite, caractérisé en ce qu'il comprend des couches successives d'une résine de polyamide filmogène, au moins un copolymère plastifié d'éthylène et d'alcool vinylique, une résine polyamide filmogène, respectivement une résine adhésive et une résine ionomère, la résine polyamide filmogène ayant une masse moléculaire d'environ 20 000 à 30 000 et un point de fusion d'environ 213 à 227°C (415 à 440°F), le copolymère EVOH ayant une masse moléculaire d'environ 15 000 à 30 000, une teneur en fragment alcool vinylique d'environ 60 à 75 pourcent, et un point de fusion d'environ 163 à 191°C (325 à 375°F), la couche d'adhésif comprenant une polyoléfine modifiée aux anhydrides ou un copolymère d'éthylène et d'acétate de vinyle partiellement hydrolysé, le copolymère EVOH étant plastifié par un plastifiant choisi parmi les sulfonamides aromatiques plastifiants, la polyéthyloxazoline, la polyvinylpyrrolidone et le polyvinylformaldéhyde.

21. Film selon la revendication 20, caractérisé en ce que l'épaisseur du film est d'environ 0,08 à 0,13 mm (3 à 5 mils).

22. Film selon la revendication 21, caractérisé en ce que la couche adhésive est elle-même un composite constitué d'une âme possédant des couches extérieures de cet adhésif.

## Patentansprüche

1. Äthylen-Vinylalkohol (EVOH)-Copolymerisatharzgemisch, extrudierbar zur Erzeugung einer Folie mit gleichmäßiger Dicke und hervorragender Sauerstoffundurchlässigkeit, dadurch gekennzeichnet, daß sie etwa 95 bis 80 Gewichtsprozent Äthylen-Vinylalkohol-Copolymerisat mit einem Molekulargewicht von etwa 15 000 bis 30 000 und einer Schmelzpunktstemperatur von etwa 163 bis 191°C (325 bis 375°F) und mindestens 1 Gewichtsprozent, z.B. etwa 5 bis 20 Gewichtsprozent eines der Weichmacher aromatische Sulfonamid-Weichmacher, Polyäthyloxazolin, Polyvinylpyrrolidon und Polyvinylformaldehyd umfaßt, wobei der Weichmacher mit dem Copolymerisat verträglich und zur intermolekularen Wasserstoffbindung damit befähigt ist.

2. Masse nach Anspruch 1, dadurch gekennzeichnet, daß sie mindestens 90 Gewichtsprozent des EVOH-Copolymerisats enthält.

3. Masse nach Anspruch 1 oder Anspruch 2, dadurch gekennzeichnet, daß der Weichmacher ein aromatisches Sulfonamid ist, nämlich o,p-Toluolsulfonamid, N-Äthyl-o,p-toluolsulfonamid oder Äthylbenzolsulfonamid.

4. Verfahren zur Herstellung eines zusammengesetzten Folienproduktes mit gleichmäßiger Dicke und hervorragender Sauerstoffundurchlässigkeit, gekennzeichnet durch die Stufen:

a) Herstellung eines innigen Gemisches von etwa 95 bis 80 Gewichtsprozent eines Äthylen-Vinylalkohol-Copolymerisates mit einem Molekulargewicht von etwa 15 000 bis 30 000 und einer Schmelztemperatur von etwa 163 bis 191°C (325 bis 375°F) und mindestens 1 Gewichtsprozent, z.B. etwa 5 bis 20 Gewichtsprozent eines der Weichmacher aromatische Sulfonamide, Polyäthyloxazolin, Polyvinylpyrrolidon und Polyvinylformaldehyd;

b) Erhitzen der Masse um sie zu schmelzen;

c) kontinuierliches Einpressen der geschmolzenen Masse in eine Coextrusionsform;

d) gleichzeitiges Einpressen eines geschmolzenen filmbildenden Harzes in die Form, wobei das filmbildende Harz eine von dem genannten Gemisch unterschiedliche Zusammensetzung aufweist, und wobei es an diesem in geschmolzenem Zustand haftet;

e) Verbinden des Gemisches und des Harzes in der Form zu einem aus ersten bzw. zweiten Schichten bestehenden Schichtaufbau;

f) Durchdrücken des Schichtaufbaus durch einen Formbereich, in dem der Aufbau wesentlich verbreitert und verdünnt wird;

g) Extrudieren des erhaltenen Aufbaus aus der Form als zusammengesetzte Folie; und

h) Kühlen der folie zur Erzeugung des zusammengesetzten Folienproduktes.

5. Verfahren nach Anspruch 4, dadurch gekennzeichnet, daß der Weichmacher eines der aromatischen Sulfonamide o,p-Toluolsulfonamid, N-Äthyl-o,p-toluolsulfonamid oder Äthylbenzolsulfonamid ist.

6. Verfahren nach Anspruch 4 oder Anspruch 5, dadurch gekennzeichnet, daß das filmbildende Harz ein Polyamid mit hohem Molekulargewicht und einer Schmelzpunktstemperatur von etwa 213 bis 227°C (415 bis 440°F), ein teilweise hydrolysierter Äthylen-Vinylacetat-Copolymerisat-Klebstoff oder ein Anhydrid-modifizierter Polyolefin-Klebstoff ist.

7. Verfahren nach Anspruch 6, dadurch gekennzeichnet, daß das film-bildende Harz ein Polyamid mit einem Molekulargewicht im Bereich von etwa 20 000 bis 30 000 umfaßt.

8. Verfahren nach einem der Ansprüche 4 bis 7, dadurch gekennzeichnet, daß man in den Stufen c) bis g) eine stationäre Form verwendet und daß man die aus ihr extrudierte Folie auf eine Abschreckwalze aufbringt.

9. Verfahren nach einem der Ansprüche 4 bis 8, dadurch gekennzeichnet, daß man die Breite des Aufbaus in Stufe (f) mindestens etwa 40-fach vergrößert.

10. Verfahren nach einem der Ansprüche 4 bis 9, dadurch gekennzeichnet, daß die Dicke der ersten Schicht an keinem Punkt innerhalb der Breite der Folie den Mittelwert der Dicke der Schicht um etwa 40% überschreitet, wobei mindestens etwa 60% der genannten Schicht eine Dicke innerhalb von etwa 20% des genannten Mittelwertes haben.

11. Verfahren nach einem der Ansprüche 4 bis 10, dadurch gekennzeichnet, daß man ein zweites filmbildendes Harz zur Verbindung mit dem Gemisch und dem zuerst erwähnten Harz zu einem Schichtaufbau als dritte Schicht davon in die genannte Form einführt.

12. Verfahren nach Anspruch 11, dadurch gekennzeichnet, daß man die dritte Schicht in vollem Oberflächenkontakt mit der zweiten Schicht anordnet, welche das erstgenannte Harz ist, und welche zum Verbinden der ersten und dritten Schicht miteinander dient.

13. Verfahren nach Anspruch 11 oder Anspruch 12, dadurch gekennzeichnet, daß das zweite Harz ein Polyäthylen, Polypropylen, Äthylen-Vinylacetat-Copolymerisat oder ein ionomeres Harz ist.

14. Verfahren nach Anspruch 11 oder Anspruch 12, dadurch gekennzeichnet, daß das erste und das zweite Harz jeweils ein Polyamidharz mit einem Molekulargewicht von etwa 20 000 bis 30 000 und einer Schmelzpunktstemperatur von etwa 213 bis 227°C (415 bis 440°F) umfassen, wobei die aus diesen Harzen bestehende zweite und dritte Schicht auf gegenüberliegenden Seiten der ersten Schicht angeordnet sind.

15. Verfahren nach einem der Ansprüche 11 bis 14, dadurch gekennzeichnet, daß man mindestens ein wieteres filmbildendes Harz zur Verbindung mit dem Gemisch und dem ersten und zweiten Harz zu einem Schichtaufbau einbringt, um mindestens eine vierte Schicht davon zu erzeugen.

16. Verfahren nach Anspruch 15, dadurch gekennzeichnet, daß man eine an der vierten Schicht anliegende fünfte Schicht schafft, wobei die fünfte Schicht aus einem Ionomeren besteht und die vierte Schicht einen Klebstoff umfaßt, der zum Binden der fünften Schicht an die dritte Schicht dient.

17. Verfahren nach Anspruch 16, dadurch gekennzeichnet, daß die erzeugte folie eine Gesamtdicke von etwa 0,08 bis 0,13 mm (3 bis 5 mil) aufweist, wobei die erste, zweite und dritte Schicht zusammen weniger als etwa 50 Volumenprozent der Folie umfassen.

18. Verfahren nach Anspruch 17, dadurch gekennzeichnet, daß sich die zweite Schicht außen auf der Folie befindet und etwa 2,5 mal die Dicke der genannten ersten Schicht aufweist, und daß die dritte Schicht etwa die Hälfte der Dicke der ersten Schicht besitzt.

19. Verfahren nach einem der Ansprüche 4 bis 18, gekennzeichnet durch die zusätzlichen Stufen:

i) Erhitzen der folie auf eine zu ihrer Wärmeverformung geeignete Temperatur;

j) Ausübung von mechanischem oder Flüssigkeitsdruck auf die erhitzte Folie, um mindestens einen Bereich davon zu recken; und

k) Abkühlen der gereckten Folie um die Folie in ihrem verdrehten Zustand zu verfestigen, wobei die verfestigte Folie im wesentlichen frei von feinen Löchern, Rissen und ähnlichen Fehlern ist.

20. Zusammengesetzte Folie, dadurch gekennzeichnet, daß sie aufeinanderfolgende Schichten aus einem filmbildenden Polyamidharz, mindestens einem weichgemachten Äthylen-Vinylalkohol-Copolymerisat, einem filmbildenden Polyamidharz, einem Klebstoff und einem ionomeren Harz umfaßt, wobei das filmbildende Polyamidharz ein Molekulargewicht von etwa 20 000 bis 30 000 und eine Schmelzpunktstemperatur von etwa 213 bis 227°C (415 bis 440°F) aufweist, das EVOH-Copolymerisat ein Molekulargewicht von etwa 15 000 bis 30 000, einen Gehalt an Vinlylalkohol-Einheiten von etwa 60 bis 75% davon und eine Schmelzpunktstemperatur von etwa 163 bis 191°C (325 bis 375°F) aufweist und wobei die genannte Klebstoffschicht ein Anhydrid-modifiziertes Polyolefin oder teilweise hydrolysiertes Äthylen-Vinylacetat-Copolymerisat umfaßt, wobei das EVOH-Copolymerisat mit einem der Weichmacher aromatische Sulfonamid-Weichmacher, Polyäthyloxazolin, Polyvinylpyrrolidon und Polyvinylformaldehyd weichgemacht ist.

21. Folie nach Anspruch 20, dadurch gekennzeichnet, daß die Folie etwa 0,08 bis 0,13 mm (3 bis 5 mil) dick ist.

22. Folie nach Anspruch 21, dadurch gekennzeichnet, daß die Klebstoffschicht selbst zusammengesetzt ist und einen Kern mit äußeren Schichten des genannten Klebstoffs umfaßt.